# EUROPEAN PATENT APPLICATION

(11) **EP 4 120 211 A1**
(43) Date of publication of application: **18.01.2023**
(21) Application number: 22020332.7
(22) Date of filing: 13.07.2022
(51) Int. Cl.: G07C 9/25, G07C 9/28, G07C 9/26, G06K 9/00, G06N 3/02

(54) **INTEGRATED SECURITY SYSTEM FOR CONTROLLING ACCESSES AND TRANSITS IN A RESTRICTED ACCESS AREA, AND IMPLEMENTATION METHOD THEREOF**

(30) Priority: 14.07.2021 IT 202100018614
(71) Applicant: Servizi Aziendali Pricewaterhousecoopers S.r.l., 20145 Milano (MI) (IT)
(72) Inventor: Quadri, Paola, STEZZANO (BG) (IT)
(74) Representative: Cian, Paolo

(57) **Abstract**

A system for controlling accesses and transits in a virtually delimited restricted access area (12), comprises an identification device (14) associated with each subject (S), comprising an identification code that can be communicated remotely. The control system (10) comprises a sub-system for locating the identification devices (14), which includes a module for receiving signals (16) from the identification devices (14) to identify the identification devices (14), a scanning sub-system including at least one device (18) for capturing images of the area (12) and for identifying subjects (S), a processing sub-system (20) including a positioning module (22) for the identification devices (14), a video analysis module (24) to recognize the subjects (S) in the images and to identify their position, and a central module (26) to compare the position data of the identification devices (14) and the subjects (S) to verify their authorization to access such an area (12).

## Description

The present invention refers in general to integrated security systems and, in particular, it relates to a security system for controlling accesses and transits in a confined restricted access area such as a portion of a building, an infrastructure, a means of transport, or an outdoor area, or part of a treatment and handling plant or the like, which system is able to verify whether a subject, which may be a person, an animal or an object, is authorized to access and transit in this area, and to take specific actions when a subject authorized to access and transit, or lacking in such an authorization, is detected in that area.

The restricted access area in which the system operates is virtually delimited, so that it can be configured and adapted dynamically to different needs, making unnecessary the use of physical and architectural barriers that could hinder the entry, transit and exit of subjects with respect to this area.

Various security systems are known in the art for controlling the entry of subjects into a restricted access area in which access is allowed only to subjects in possession of a specific authorization.

Some of these control systems use video surveillance devices and radio-frequency communication technologies with a wide range of action, for example radio-frequency communication technologies of the known type called Bluetooth^{®}.

The known video analysis systems, however, are not currently efficient enough to be used in practice for access control to a restricted access area, as the traditional video analysis systems they use to process the images generated by a video surveillance device are not able to accurately and reliably distinguish some subjects, and to discriminate accurately the different classes of subjects (such as human figures, trolleys, AGVs (Automated Guided Vehicles) and company assets, etc.). Furthermore, these control systems make it possible to distinguish and recognize some categories or classes of subjects mostly within the field of view of a single camera, but cannot manage and combine satisfactorily various images of a subject coming from multiple cameras. For these reasons, the known control systems are not sufficiently reliable and high performing to be used to control and manage the accesses to a restricted access area.

Other control systems based on radio technologies have other problems. For example, an intrinsic problem of traditional Bluetooth technology is represented by its lack of accuracy in discriminating multiple subjects in close proximity, while an access control system requires a subject discrimination accuracy that is essentially close to 100%, in order to be usable in practice. This uncertainty in determining the position can be overcome by weakening the signal and forcing the recognition device of a subject to be placed a few centimeters from a reader, which involves an active action by the subject whose authorization must be verified, which would like to be avoided.

In a common case, known access control systems comprise control devices of the physical barrier type, such as turnstiles, sliding doors or the like, located at the entrance to the restricted access area and with which an apparatus for recognition of the authorization of a subject to enter that area is associated. The apparatus in question is usually constituted by a reader of the information relating to the subject stored in a "code" type identification device, commonly made in the form of a card or badge, a bracelet, a watch, a mobile phone or similar device, which is carried by a subject who has to access the area. In these known systems, the identification of a subject upon entering the restricted access area, and/or possibly exiting it, is accurate as the identification device is displayed in a position close to the reader of the recognition apparatus, or placed in direct contact with it, so there is no uncertainty in the discrimination of the subjects.

Various known control systems comprise a series of access points to a restricted access area, with associated physical barriers such as automatically operated doors. For example, the patent document US-2016/055692 describes such a control system capable of reading the data relating to an authorization of an individual to enter the area, without the need to carry the identification device containing the data relating to the subject, which can be in the form of a card or other support, such as a key ring or a mobile phone, at a reader placed close to a physical barrier. The data of the identification device read by the reader are transmitted in wireless communication mode to a verification and tracking system, which is part of a positioning unit of the system, through antennas and radio-frequency wireless communication systems operating according to the known communication protocol BLE (Bluetooth Low Emission), in order to determine a subject's position, authenticate the subject if the subject is provided of a valid authorization, and open the physical barrier when the subject is in its proximity. This system includes cameras to capture images of individuals equipped with identification devices, a video analysis system to determine the identity of individuals carrying the identification devices, for example through facial recognition software, and to compare the data obtained for each individual with data stored in a data-base of information relating to authorized individuals.

However, control systems equipped with physical barriers can easily cause queues or crowding of individuals upstream of a recognition apparatus, whether it is placed at the entrance or the exit of the restricted area, as this type of apparatus normally requires the individuals to slow down at least, which can slow the flow of subjects entering and/or exiting the restricted access area and, in any case, form an obstacle for people with reduced mobility such as wheelchair users, creating a sort of "bottleneck" for accessing or exiting the restricted area, particularly in the case of an emergency evacuation of the area, which it is important to avoid.

Furthermore, the presence of physical access barriers, such as turnstiles or sliding doors, constitutes a limit from an architectural or logistical point of view for the flexibility of the design of the environments. In fact, current design strategies tend to eliminate these physical barriers to make architectural spaces more versatile according to the concept of an "open" environment, easily reconfigurable and integrated with the surrounding context, as well as to allow people with special needs, such as the disabled, to access and move easily inside, and to allow rapid evacuation from the area without slowing down in case of emergency. Furthermore, once opened by an authorized person, the physical barriers can allow other subjects to enter the restricted access area even without a valid authorization.

Other known access surveillance systems include video surveillance devices capable of acquiring and analyzing biometric data of an individual, for example, their physiognomic data, such as facial recognition data, or data related to their style of walking or proceeding, which are used by the system to recognize whether a specific individual is authorized to access a restricted access area, following a comparison with data previously stored in a data-base associated with the control system. When an individual is recognized as authorized, following verification of the data present in the identification device, their entry and transit in the restricted access area are allowed.

The patent document EP-3413275 describes a system for controlling the access of individuals to a restricted access area without physical barriers. The system includes means for capturing digital images of the monitored area, an ultra-broadband reader to read the data contained in an identification device associated with each individual, a geo-location system for individuals equipped with the identification device present in the area, which determines their coordinates through data transmitted by the identification devices, means for extracting a measured biometric model of each individual from the images acquired by the image capture means, means for obtaining a reference biometric model from a server relative to each individual and means for comparing an individual's measured biometric model with the relative reference biometric model. If there is a correspondence between the measured biometric model and the reference biometric model of an individual, the authorization of an individual to enter the restricted area is verified.

The patent document WO-2015/130744 refers to a system organized into various levels to identify unauthorized persons within a restricted access area through the use of biometric recognition software or algorithms, for example, facial recognition. The system includes devices for generating video images of individuals present in the area that are processed to discriminate people and any animals and to track the movements of people within this area. The system uses readers operating on the basis of known communication protocols, such as RFID (Radio Frequency Identification), BLE, MAC address or NFC (Near Field Communication), to read data relating to the credentials of people and stored on cards or in electronic identification devices carried by the individuals, determines the number of people in one or more video images through video people recognition systems and checks whether there is a correspondence between the number of individuals in the area and the number of identification devices detected.

However, the control systems that use video surveillance devices, which acquire and analyze biometric data of individuals to verify their authorization, are considered unreliable, especially with reference to numeric access control, and often involve violations of the privacy regulations, therefore, they are used in only a small number of applications.

In particular, the algorithms commonly used for facial recognition of people, in order for the recognition to be reliable, require digital images with high resolution and low background noise, obtained in good lighting conditions and, therefore of excellent quality, which require relatively long processing times. Furthermore, the facial recognition technique can be complex and unreliable if the face of a subject is partially or totally hidden by shadows or extraneous elements, as can easily happen, and poses problems, in any case, in view of the privacy regulations.

The patent document EP-3456040, on which the preamble of the annexed claim 1 is based, refers to a surveillance system for controlling the physical accesses of people in a restricted access area without physical barriers, which includes cameras to generate digital images of the area and the individuals present in it. Individuals equipped with an identification device designed to transmit data to a base station of the system via a wireless communication protocol are authorized to access this area. The system also includes a positioning module capable of determining the position parameters of the identification devices present in the area with respect to the base station, an image processing module to detect one or more individuals in them through human detection algorithms and a surveillance module to determine the presence of unauthorized individuals in digital images, taking into account the individuals detected by the image processing module and the position parameters determined by the positioning module. The surveillance module analyzes the position parameters of authorized individuals to determine their predicted position and to compare this predicted position with a position of the respective individuals in a digital image, thereby identifying authorized and unauthorized individuals present in an image.

However, the system of EP-3456040 is not capable of enabling the reliable recognition of individuals in the monitored area, as it has a limited ability to discriminate different individuals, particularly when the area is crowded, which makes it unsuitable for a practical use. Furthermore, due to its structure and the algorithms it employs, this known system requires relatively long image processing times, which contributes to making it imprecise and poorly reliable for monitoring accesses, especially in the presence of a large number of subjects to be controlled.

In addition, the known devices considered above are specifically intended to recognize individuals, therefore, natural persons, in a controlled area, but they are not designed to monitor different classes of subjects, including non-human subjects, such as animals or objects of various kinds, which are not taken into consideration, nor can they be recognized as authorized or unauthorized to access a restricted access area, as they are not equipped with a recognition device.

In fact, it would be useful to have an access control system for a restricted access area that also considers classes of subjects other than humans. For example, in the case of objects, these could consist of wrappings or containers of goods whose path one would like to track to perform a logistic check, or parts or semi-finished products moving along automatic transfer systems, for example, including conveyor belts or the like, which can be subjected to specific manufacturing or treatment processes based on conditions imposed by the system according to their condition or structure. In a typical case in which an object moving along an automatic production line is tracked, the presence of a particular authorization can allow its continuation along one production process or another and, in the event that the object in question consists of a vehicle, a specific authorization can allow it access to a certain restricted access area for a particular operation or treatment, for example.

In conclusion, the known video surveillance systems that use cameras with which a software for controlling the position of the subjects is associated, are normally affected by problems for counting people and are unable to guarantee a level of accuracy close to 100%, which is necessary to be able to perform the function of a security system in a reliable way, while the systems in which the identification of human subjects and the verification of their authorization is subject to the use of biometric data and/or the analysis of their walking style operate in a way that does not comply with privacy regulations and, in any case, have poor reliability and are not designed to follow a subject responsible for a violation beyond the field of view of the cameras of the control system which is limited to the restricted access area monitored.

In order to solve the problems of the prior art, this invention relates to an integrated system for controlling accesses and transits in a restricted access area, having the features mentioned in the attached claims.

In particular, by virtue of the fact that the location sub-system in the control system of the invention is structured in such a manner as to identify the identification devices in real time with a maximum uncertainty which is less than a minimum dimension of the relative subject referred to its projection in plan, and includes a transmission module for transmitting signals towards the identification devices in said area to carry out bidirectional communications with each identification device and as the video analysis module is responsible for assigning each subject a predefined reference class by the use of a segmentation algorithm of the images, and for associating a simple reference figure to each subject detected in said area by means of a masking algorithm, said image segmentation and masking algorithms being neural network algorithms which are subjected to a prior training step to provide results with a predetermined accuracy in order that the system is able to perform a reliable access control, the control system of the invention can be used effectively to control accesses and transits in a restricted access area in an extremely accurate manner.

According to a preferred feature of the invention, the central module is designed to send a signal related to the authorization level found for each subject to the transmission module of the location sub-system, to inform it of the own authorization level. In this manner, the system of the invention is able to inform the subjects of the status of their authorization, so that they can take any corrective action.

According to another preferred feature of the invention, the control system includes a user interface module that receives data from the central module to manage communications addressed to supervisory personnel of the system in the case of a violation performed by a person lacking in an authorization to enter the restricted area. In this manner, the system is able to inform the security personnel, who oversee the operation of the system, to enable them to intervene promptly as a result of the violation.

According to yet another preferred feature of the invention, the control system comprises a data-base connected to the central module, to allow to record in it information relating to each transit event of a subject in said area, as well as data relating to any violation performed by a subject.

This makes it possible to obtain a historical archive of the events relating to the access of subjects in the monitored area, and of their outcome.

Furthermore, the invention relates to a method for implementing a system for controlling accesses and transits of subjects in a virtually delimited restricted access area, as defined by the attached claims 14 to 25.

In particular, the method comprises the operations of preparing a module for transmitting signals towards the identification devices present in said area and associating it with the location sub-system of the identification devices to allow the control system to carry out bidirectional communications of reception and transmission of data to and from each identification device, and preparing the video analysis module so as to attribute to each subject in said area a respective reference class through the use of a neural network segmentation algorithm of the images and to associate a simple reference figure to each subject detected in the images captured in said area by the spatial scanning sub-system, by means of a masking neural network algorithm, subjecting the video analysis module to a preliminary training step of the image segmentation and masking algorithms, in order to obtain a desired precision of the data resulting from their execution, in which the operations of identifying the identification devices and determining their authorization level carried out by the location sub-system involve the operation of imposing a maximum uncertainty less than a minimum dimension of the relative subject referred to its projection in plan.

Further characteristics and advantages of the system of the invention and of the related implementation process will become clearer from the detailed description that follows, provided by way of a non-limiting example and referring to the attached drawings in which:
Figure 1 is a schematic view showing a restricted access area to which different classes of subjects are admitted, monitored by means of a control system according to the invention,
Figure 2 is a schematic view similar to Figure 1, which highlights the main elements of the control system of the invention,
Figure 3 is a schematic view showing various subjects in a restricted access area, some of whom, in possession of a valid authorization, are authorized to access, while others, without a valid authorization, are not authorized to access,
Figures 4A, 4B, 4C and 4D are flowcharts showing steps performed by the control system of the invention depending on the type of identification device of a subject, in order to verify an authorization of a subject to access the restricted access area,
Figure 5 is a schematic view showing an image of the restricted area displayed for security personnel, which contains a plurality of subjects, and
Figure 6 is a schematic view showing an image of subjects captured by the system according to the invention outside the restricted access area, to identify the path of a subject who has performed a violation and who has left the restricted access area.

With reference to the figures, an integrated security system according to the invention, indicated 10 as a whole, is intended to control the accesses and transits of subjects in a restricted access area 12.

The area 12 is virtually delimited, so that its perimeter, or at least one of its entry lines 12a and one of its exit lines 12b, are defined by software, which makes it possible to avoid the presence of architectural or physical barriers, such as turnstiles or sliding doors, which could slow down the entry, transit and exit of the subjects, and form "bottlenecks" for the flow of subjects with respect to the area 12, for example in the case of an emergency evacuation.

The various subjects considered by the system 10 for the purposes of accessing the area 12, indicated by references S1, S2, ... Sn, or generically by S, may belong to different classes of subjects, or consist of human persons or individuals, or animals or objects of any kind, such as parts or containers, which are authorized to access the area 12 only if provided with a specific authorization whose presence can be verified by the system 10.

For this purpose, each subject S must be in possession of a "code" type identification device 14, which contains a unique recognition code for the related subject S. Different information relating to the subject S can be associated with this unique code, in particular relating to one of their authorization levels.

This information can be stored in the same device 14, which consists of a card or badge A, for example, or on an electronic device B of various kinds, such as a mobile phone, a tablet, a smart watch, or the like, or be acquired by the system 10 by accessing a data archive associated with the system 10 through the unique identification code for a subject S, or communicating therewith.

Each identification device 14 can also include at least one sensor suitable for detecting a physical quantity relating to a condition of the device 14 itself or of the relative subject S, for example, a temperature, a humidity level and/or an acceleration of movement of the subject, which physical quantity can be used by the system 10 to condition the granting of a valid authorization to the subject S.

The unique identification code for a subject S contained in the relevant identification device 14 and any information associated with it, if present in the same device 14, are acquired by the control system 10 by remote reading of the device 14. This reading is performed by a sub-system for locating the identification devices 14, by means of a module 16 for receiving short or medium-range radio-frequency signals or ultrasounds emitted by the identification devices 14 present in the area 12, thanks to which the identification devices 14 are identified in real time in order to determine their authorization level.

In particular, the module 16 consists of a radio-frequency or ultrasonic wireless apparatus for receiving the signals emitted by the identification devices 14, which comprises high-precision short-medium range radio receiving antennas (of the order of 5-50 meters), and which uses known communication technologies, such as Bluetooth or NFC (Near Field Communication), UWB, ultrasound, etc., or technologies of the RFID (Radio Frequency Identification) transponder type, or systems traditionally known for outdoor positioning, such as GPS (Global Positioning System), Assisted GPS (A-GPS)and Glonass, etc.

In the case of the use of communication technologies of the Bluetooth type, the known communication protocol BLE (Bluetooth Low Energy) is preferably used, preferably by means of AoA methodology, to enable a more accurate discrimination of subjects S to be obtained, particularly if they are close together.

The location sub-system can also be integrated with the known IPS (Indoor Positioning System) positioning systems used, above all, for locating people or objects in indoor areas, which allows the use of a single support as an identification device 14 for a subject S for access and transit in a confined area, both in the context of the system 10 of the invention, and for the operation of pre-existing control equipment of the IPS type, for example, in the same environment in which the system 10 of the invention operates.

As the identification devices 14 can be read remotely by the radio-frequency or ultrasound receiving equipment of the module 16, there is no need for a subject S to have their own identification device 14 in a position close to a reading device, as in common control systems equipped with physical barriers.

The module 16 is also designed to emit signals towards the identification devices 14, in the cases and according to the modalities clarified in the following description.

The system 10 is able to detect the presence of subjects S in the area 12 by means of a spatial scanning sub-system which comprises one or more optical devices 18 for acquiring digital images, and to identify the various subjects S present in these images. The optical devices 18 of the spatial scanning sub-system, which cumulatively have a field of view with a range such as to substantially cover the entire area 12, can consist of cameras, Infrared (IR) sensors, 3D scanning laser systems or point cloud scanning systems, etc.

Since the quality and definition of the digital images acquired by the optical devices 18 of this sub-system do not have to meet particularly stringent requirements, low-cost optical devices can also be used.

The data acquired by the location sub-system through remote reading of the data stored in the devices 14, in particular by means of the receiving equipment of the module 16, and the data relating to the digital images of the area 12 obtained by the spatial scanning sub-system by means of the optical devices 18 are transmitted to a data processing sub-system 20 of the system 10, which processes the data received to check whether a subject S has a valid authorization to access the area 12 and to transit through it.

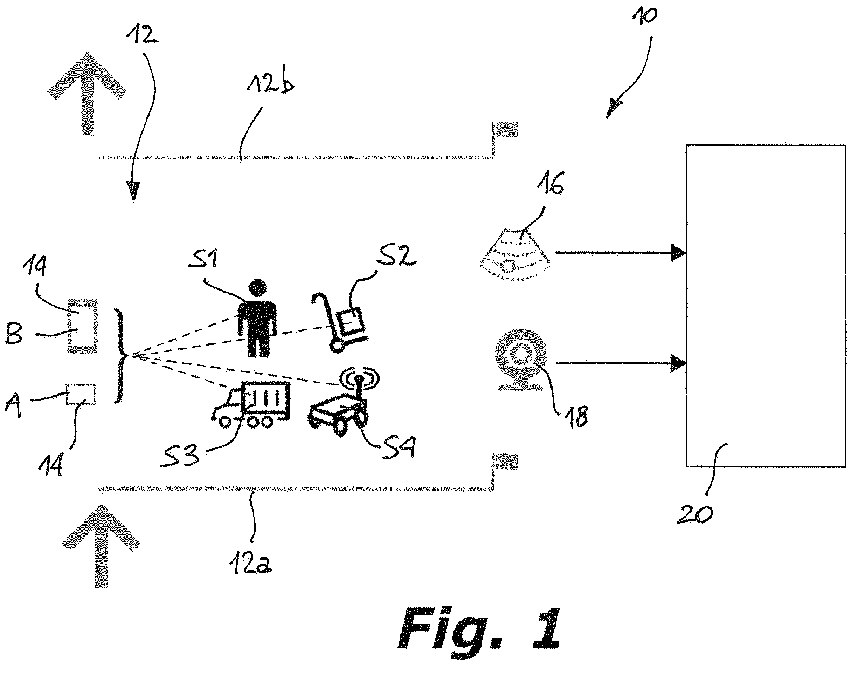

Figure 1 shows a restricted access area 12 defined by an entry line 12a and an exit line 12b, in which various subjects of different classes are present, such as a human subject S1, a crate S2 carried by a manual trolley, a vehicle S3 and a robotic trolley S4, each of which comprises an identification device 14, which can be of a type A, for example, consisting of an integrated microcircuit (chip) or an identification card, or a type B consisting of a portable electronic device such as, for example, a smart phone, a smart watch or a tablet, which identification device 14 is capable of being detected by the module 16 that receives radio-frequency signals emitted thereby, including the aforementioned unique identification code at least.

According to the direction of movement of the relative subject, the lines 12a and 12b can be switched between them automatically by software.

Furthermore, the subjects S1,..., S4 present in the area 12 are detected by the optical devices 18 and the data acquired by the module 16 and the optical devices 18 are transmitted to the processing sub-system 20 of the system 10.

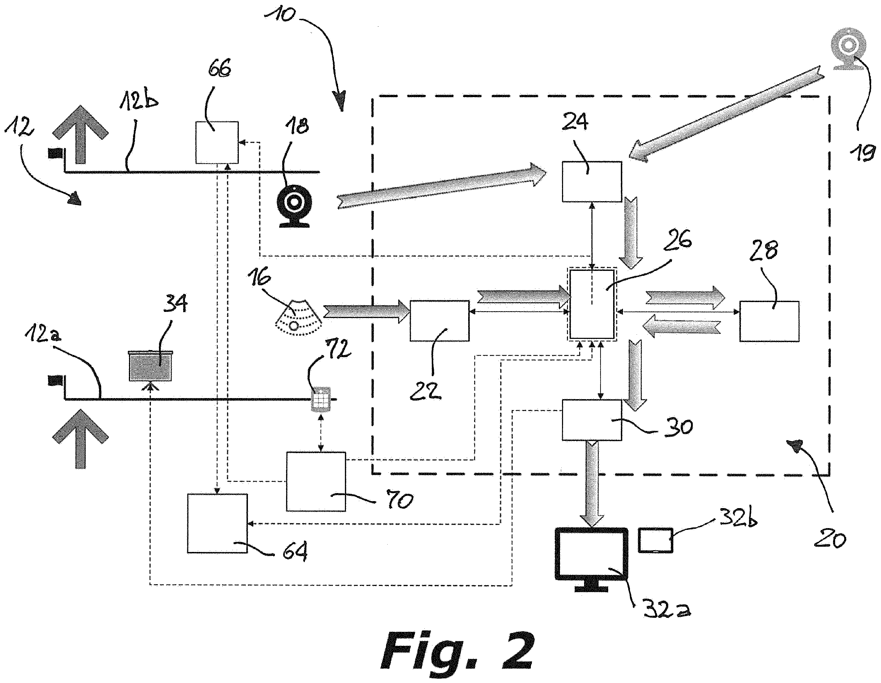

The data processing sub-system 20 operates by means of a series of independent modules connected to each other and operating in a coordinated manner, schematically illustrated in Figure 2 of the drawings. The various modules of the sub-system 20 can be integrated into a single computer or divided among several computers and essentially consist of:
- a positioning module 22 which receives data from the receiving module 16 and executes an algorithm for processing these data to determine an instantaneous position of each identification device 14 with respect to a predefined system of coordinates of the area 12;
- a video analysis module 24 for the management and interpretation of the digital images captured by the optical devices 18 of the spatial scanning sub-system, which uses neural network algorithms that must be previously subjected to a training phase to be able to recognize the different classes of subjects S present in the area 12 and the environmental characteristics of the area 12, and to correctly identify and track the various subjects S present in the area 12, in real time and with high precision;

- a central module 26 for verifying violations by subjects S, which operates by means of an algorithm for comparing the data coming from the positioning module 22 and the data coming from the video analysis module 24, to determine whether any violations have occurred in real time that take place in the event that there is no correspondence between such data and
- a user interface module 30 intended to manage communications from the system 10 to the outside according to the information relating to the authorization level found for each subject S.

The positioning module 22 allows the system 10 to discriminate the various identification devices 14 present in the area 12, recognized by the unique code associated with each of them, and to obtain its coordinates, or its instantaneous position, with respect to the area 12.

The module 22 operates according to a technology selected depending on the specific application and physical environmental characteristics of the area 12, which can be defined inside or outside a building, infrastructure or means of transport, and can take other variables into account, for example, the method of fixing the readers, as well as the characteristics of the subject S with which the device 14 is associated, such as the class and/or shape thereof, as well as the type of support or fixing of the identification device 14.

In order to operate with the precision and reliability performances required for the operation of the system 10, the operating technology of the module 22 must meet the following requirements, in any case:
- have a precision in terms of the maximum uncertainty of identification of the devices 14 in the whole area 12, for the purposes of their location, which is less than a minimum dimension of the relative subject S referred to its projection in plan, and preferably equal to half the smaller dimension of the subject S referred to its orthogonal projection in plan, and
- allow the reading and processing in real time of the data coming from the maximum number of identification devices 14 admissible at the same time in the area 12, while the subjects S proceed with their own movements without slowing down or changing the direction of movement, without forming queues or creating "bottlenecks".

The algorithm used by the positioning module 22 is initially selected according to the specific application of the system 10 from a series of algorithms suitable for identifying the position of the identification devices 14, then subjected to phases of verification of its operation in a test environment, then optimized on the basis of the physical characteristics of the area 12 and the identification devices 14, until the algorithm reaches the performance required for the correct operation of the system 10, after which it can be released for its operational use by the module 22.

The video analysis module 24 makes it possible to determine the coordinates of the instantaneous position of each subject S present in the digital images of the area 12 acquired by the optical devices 18 of the spatial scanning sub-system, independently from the fact that the subjects S present in these images are also recognized by the positioning module 22.

During its operation, the module 24 executes an image segmentation algorithm (instance segmentation) to be able to distinguish the various subjects S in each digital image captured by the spatial scanning sub-system by identifying their profile and recognizing the class to which each of them belongs.

Furthermore, the module 24, which does not use biometric data of subjects, in particular of human subjects, to comply with privacy regulations, performs a masking algorithm of the subjects S, replacing them, once their position has been identified, with a simple or elementary geometric figure, such as a cylinder of a specific color, for example, on the basis of a condition of the relative subject S, which also makes it possible to simplify and shorten the relative processing step.

The module 24 also has the task of integrating the digital image data coming from several optical systems 18 of the spatial scanning sub-system, in the event that this sub-system is provided with a plurality of such devices, as well as receiving images acquired by optical devices 19 for capturing digital images outside the area 12, for example of the known type CCTV (Closed Circuit TeleVision), in the event that a subject S, who has been responsible for a violation in the area 12, must be followed outside this area in order to be quickly located by the security personnel responsible for supervising the system 10.

In order to recognize and discriminate subjects S in the area 12 with extremely high precision and reliability, which are decisive for the practical application of the system 10, the technologies for identifying the classes of subjects S and tracking the subjects S themselves used by the video analysis module 24 consist of deep learning and masking of the subjects S implemented through the use of neural network algorithms that need to be subjected to accurate training phases prior to their release for operational execution within the framework of the system 10.

In particular, the positioning module 22 uses a neural network algorithm, which must be initially selected and parameterized according to the specific application of the system 10 and which must then be subjected to an iterative phase of learning and training to be able to recognize the various classes of subjects, who can access the area 12, in a test environment. These learning and training steps of this neural network algorithm last until the various classes of subjects S are recognized with a predetermined precision required by the system 10 for its correct operation. This step is then repeated taking into account the environmental factors of the area 12 through successive steps of tuning the algorithm until the result of the recognition of the various classes of subjects S complies with the requirements of the system 10. The algorithm is then trained to recognize the subjects S of the different classes through a deep learning function, which involves an iterative learning process performed until the algorithm proves its ability to effectively recognize the classes of the subjects and the subjects themselves with optimal precision, as well as to perform a masking function of the subjects by replacing their shape in the digital images captured by the devices 18 with a simple geometric shape of approximation, after which the neural network algorithm can be released for its operational use by the module 24.

The comparison step performed by the central module 26 makes it possible to verify the existence of a unique correspondence between the position of the identification device 14 of a subject S detected by means of the location module 22, and the position of the relative subject S determined by means of the positioning module 24. If this correspondence is found by the module 26, it proceeds with the determination of the authorization level of the relevant identification device 14, according to one of the methods indicated below:
- by reading the information of the identification device 14 relating to the authorization level, if this information is stored in the device 14,
- by verifying information on the authorization level contained in the personal data tables of the data-base 28, performed following the access of the central module 26 to the data-base 28,
- by performing a predefined known type of condition algorithm, which processes a result on the basis of parameters recorded and sent by the identification device 14 or coming from computers external to the system 10 but communicating with it. For example, the authorization is granted only if the average temperature of the identification device 14 has remained below a pre-set threshold over a predetermined period of time, for example, over the last 30 minutes, or depending on the state (idle, not available or ready, etc.) of a machine or device intended to process the subject S. One or more thresholds managed by the condition algorithm can be preset in the system 10 or can be set by operators equipped with a specific authorization for this purpose.

The result of the verification of the presence or absence of an authorization for the access and transit of a subject S performed by the system 10 through the module 26, is stored in a data-base dedicated to logging accesses, which can consist of the same data-base 28 of the system 10.

The comparison algorithm used by the central module 26 must be structured in such a way as to require a very short processing time so that the system 10 can be used practically in order to be able to perform its access security control function in a reliable way and in real time. Thanks to the comparison algorithm used and to the structure of the central module 26, the time required for the comparison processing of the data coming from the positioning module 22 and the video analysis module 24 can be much less than 1 s.

Following the comparison between the position data of the subjects S sent by the video analysis module 24 and the position data of the identification devices 14 coming from the positioning module 22 performed through the module 26, a subject S is considered without authorization to access the area 12 when the following anomalies are found:
- the position of a subject S detected by the video analysis module 24 does not correspond to the position of an identification device 14 and, therefore, the subject S does not have a relative device 14;
- the position of a subject S detected by the video analysis module 24 corresponds to the position of a plurality of identification devices 14 detected by the positioning module 22, so that the subject S is in possession of several identification devices 14;

- a subject S detected by the video analysis module 24 belongs to a class that does not correspond to that foreseen for that subject (for example, the subject S detected is a person, but their identification device 14 belongs to a means of transport such as a trolley or an animal);
- the position of a subject S detected by the video analysis module 24 corresponds to the position of the identification device 14, which is not authorized for access/transit, however.

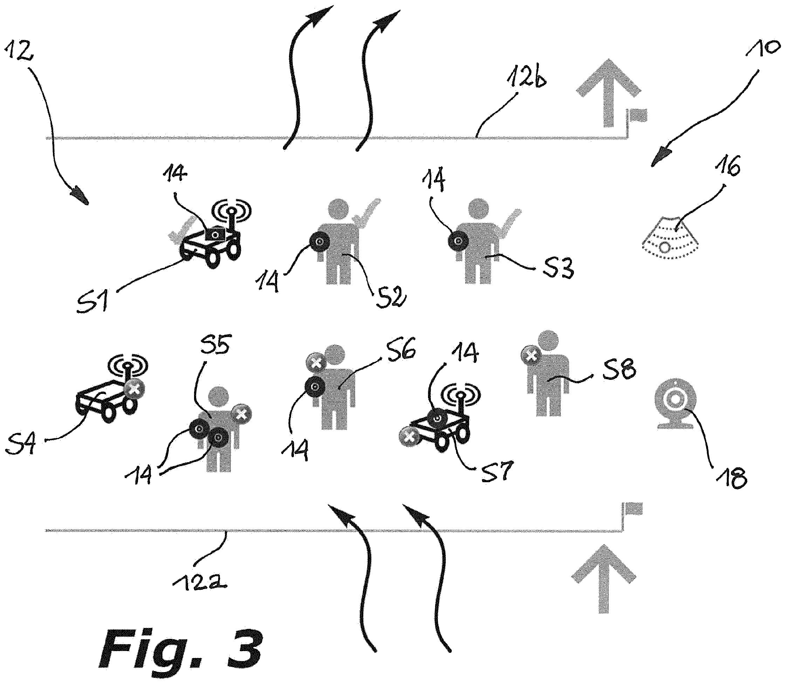

The situations identified above are schematically represented in Figure 3, where the subject S1 belongs to the class of objects and is equipped with a relative identification device 14, the subjects S2 and S3 belong to the class of human individuals and are equipped with respective identification devices 14, the subject S4 belongs to the class of objects and has no identification device 14, the subject S5 belongs to the class of human individuals and is provided with a plurality of identification devices 14, the subject S6 belongs to the class of human individuals and is provided with an identification device 14, which, however, does not correspond to the relevant subject, the subject S7 belongs to the class of objects and is provided with an identification device 14 to which a class is assigned that does not correspond to that of the relative subject and the subject S8 belonging to the class of human individuals has no identification device 14. In this situation, subjects S1, S2 and S3, whose identification device 14 is correct, are authorized to access the area 12, while subjects S4, S5, S6, S7 and S8, who are not authorized to access the area 12, are committing a violation.

When one of the four cases of anomalies indicated above occurs, the processing sub-system 20 registers a record relating to the detected violation, in the access control data-base 28, which is normally encrypted, through access by the central module 26. In particular, the data-base 28 can be an integral part of the processing sub-system 20 or consist of a pre-existing and separate data-base, containing information relating to subjects S, such as data related to their authorization level, accessible by the central module 26.

The module 26 also makes it possible to manage bidirectional communications between the subjects S or their identification devices 14 and the system 10. For this purpose, the central module 26 sends an acknowledgment signal on the authorization level verified for a specific subject S to the positioning module 22, so that the positioning module 22 can transmit a signal to the identification device 14 of the interested subject S to provide them with feedback on the basis of the level of authorization found, particularly if a violation has occurred. The signal emitted towards an identification device 14 of a subject S can consist of an optical or luminous, acoustic signal, for example, or a vibration of the relative identification device 14, or the execution of a logical action, such as a change or deletion of data from a historical archive included in the same identification device 14. The bidirectional communication of the system 10 with the identification devices 14 is essential to allow the system 10 to manage the access control, as it allows the subject S to react in the event of the signaling of a violation by performing a corrective action, which may be different depending on the type of practical application, being correlated with the type of authorization or violation found for the specific subject S.

For example, if the subject S is a person and they receive a signal relating to the lack of authorization to enter the area 12, which informs them that they have committed a violation, and if this violation was committed unintentionally, they can contact an assistance point to remedy the violation.

If the subject S is an object for which the absence of an authorization has been found and if, for example, its presence is necessary for the operation of a machinery downstream of the control area, the machinery in question can be shut down to avoid the arrival of incorrect goods.

A subject S recognized by the system 10 can be considered authorized or not authorized to access the area 12; in the second case the subject is flagged as "blocked", and a corresponding warning signal or message can be sent to the personnel in charge of surveillance or supervision of the system 10 via the module 30; through the same module 30, a report can be sent to the same subject S regarding the outcome of the verification of their authorization, specifically in the event that they are held responsible for a violation, to allow them to take corrective action.

For example, if a person S is deemed unauthorized because they lack their own identification device 14 because it has been lost, they can contact an assistance point in an attempt to trace the device 14 following the notification received.

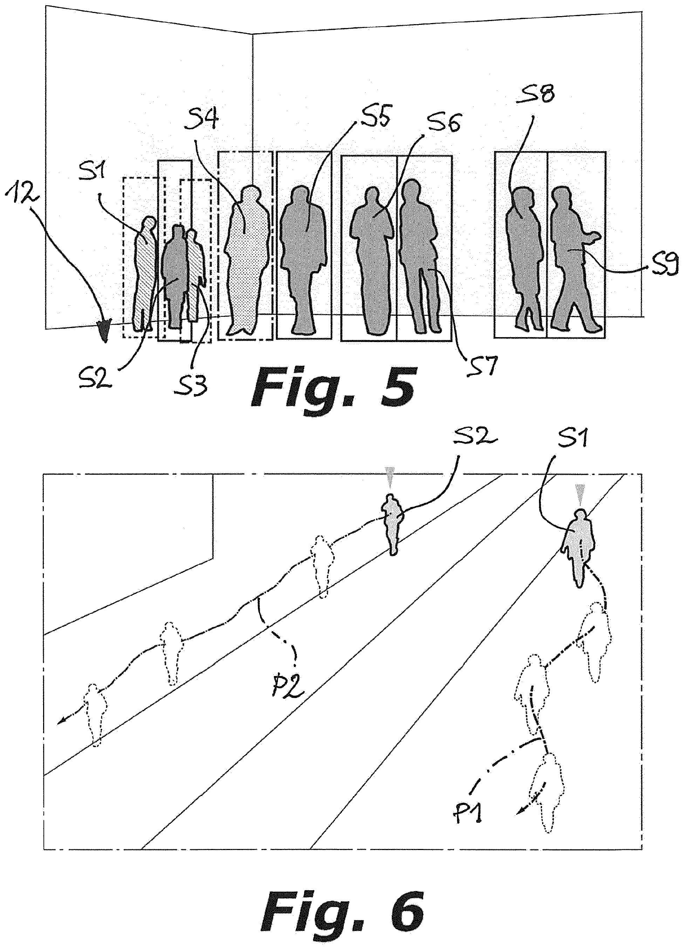

The module 30 is connected for this purpose with an apparatus for displaying images or messages, for example, consisting of a monitor 32a or the display 32b of a tablet, through which the security personnel, who supervise the system 10, are informed of an event involving a subject S, such as in the case where a subject S is responsible for a violation. The signaling of a violation committed by a subject S can also be addressed to the subject S and consist of a report with augmented reality issued by the module 30 and displayed in the area 12 through a display device 34, for example, in the form of a video streaming in which the subjects S are simulated by means of a sign associated with their position and obtained from the masking process, which sign highlights the condition found regarding their authorization (see, for example, Figure 5 in which a plurality of subjects S1 ,..., S8 are surrounded by lines of various shapes). This sign may consist of a box surrounding each subject S, for example, defined by lines whose color or shape are different (for example, defined by solid lines, dashed lines or dashed and dotted lines, etc.) depending on the level of authorization found. Alternatively, the module 30 can send an optical signal directed towards the subject S concerned, for example, by means of a luminous signal on the floor (led floor) or a beam of light that points towards the subject S, for example, with a color indicating the level of authorization found for the subject S.

In the event that a person is held responsible for a violation because they do not have an authorization or, in any case, do not have sufficient authorization, but have already left the area 12, they can be followed outside the area 12 by means of optical devices 19.

The data of the digital images acquired by the devices 19 are processed by the module 24 and transmitted to the central module 26 which, through the interface module 30, sends one or more images to the display equipment 32a or 32b, for example, in the form of a series of successive snapshots or other signals, to highlight a path followed by the subject S in question outside the area 12 (see, in this regard, Figure 6, where a subject S1 follows a path P1 and another subject S2 follows a path P2), to allow the security personnel supervising the system 10 to quickly locate the subject S to intervene.

In the operation of the system 10, the entry of a subject S into the area 12 occurs when the subject S crosses the virtual entry line 12a. From this moment the subject S is located by the video analysis module 24 and, if in possession of an identification device 14, they are also located by the positioning module 22.

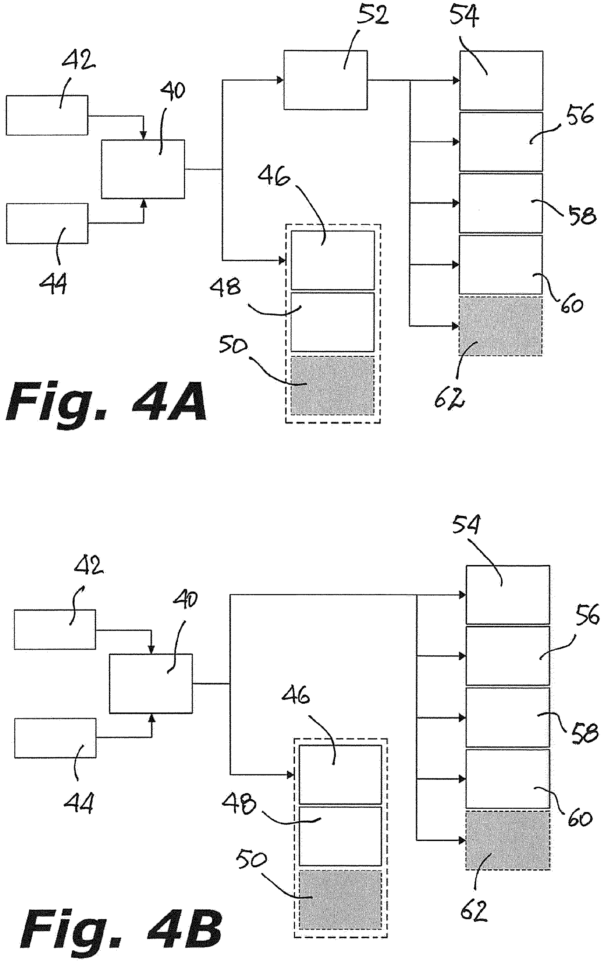

The central module 26 verifies the authorization level of the subject S according to the procedure described below with reference to the flowcharts represented in Figures 4A to 4D, according to the type of processing performed to determine the authorization level of a subject S and the data needed for this determination.

Figure 4A describes the basic operating logic of the system 10 with reference to the execution of its operating phases and the various elements that compose it, in the event that information relating to their authorization level is contained in a table of the access control base 28.

According to this logic, the system 10 performs a step 40 through the central module 26 for comparing the position data of each identification device 14 coming from a calculation step 42 performed by the positioning module 22 and the position data of each subject S coming from a calculation step 44 performed by the video analysis module 24. The result of this comparison is positive if a correspondence is detected between the position data of an identification device 14 and the related subject S or if, in the same position in which the positioning module 22 detects the presence of a device identification 14, there is a subject S recognized by the video analysis module 24 and connected to the respective identification device 14 by means of the unique identification code stored therein, or negative if there is no such correspondence.

This correspondence is not verified in the following anomaly cases:
- in the position identified by the video analysis module 24 for a subject S, there is no identification device 14,
- in the position identified by the video analysis module 24 for a single subject S, there are several identification devices 14 or
- in the position identified for an identification device 14, there is a subject S whose class does not correspond to that identified for that subject according to the unique recognition code of the relevant identification device 14.

In these cases, the central module 26 performs step 46, by which a record containing the data of the violation/anomaly is registered in the access control data-base 28, then performs step 48, which involves the issuance by the user interface module 30 of a violation report addressed to the supervisory staff of the system 10 and, if applicable, a report intended for the relevant subject S and displayed in the area 12 by means of the device 34.

In the event that the subject S, who committed the violation, has left the area 12 in the meantime, step 50 can be activated, by which the subject S is tracked by the optical devices 19 to follow their movements in order to be able to track them.

If, on the other hand, the aforementioned correspondence is verified, and the module 26 does not find any anomalies during the execution of step 40, the same module 26 proceeds with the execution of step 52 through which the authorization level of the identification device 14 is verified by accessing the access control data-base 28.

Following this check, the central module 26 carries out step 54, which involves registering a record in the data-base 28 including the information of the relative transaction, then it performs step 56, which consists in communicating information relating to the presence of a valid authorization to the identification device 14, then step 58, through which the central module 26 or an external control device 64 connected to it performs any actions related to the ascertained authorization level, including the opening of any physical barriers 66 of a pre-existing traditional control system 70, which can be placed side by side with the system 10, then, step 60, which consists in the transmission of a signal to the user interface module 30 addressed to the supervisory staff of the system 10 and possibly a signal displayed in the area 12 through the device 34 and, if applicable, step 62, which makes it possible to track the subject S outside the area 12 via the optical devices 19.

The application cases that employ the process shown in Figure 4A include the access control systems of individuals in a building, infrastructure or means of transport, or a restricted area thereof, for which the use of an access control data-base in which the personal data of the authorized subjects S are also stored, which also integrates information indicating the respective areas or floors for which the subject is authorized to access. Often these systems are also integrated with modules dedicated to the management of human resources and the booking of common spaces and meeting rooms, etc.

When the authorization level of a subject S is determined by an algorithm stored in the central module 26 on the basis of information coming from the data contained in the relevant identification device 14, this information is transmitted from the device 14 to the positioning module 22 which, in turn, sends them to the central module 26. The logic followed by the system 10 in this case is represented by a flowchart not shown as it is similar to that of Figure 4A, with the following differences:
- in step 42, the positioning module 22 sends to the central module 26 not only a simple position data associated with the identification device 14, but also more complex information to be used as input data for the processing performed by the central module 26,
- during step 52 for checking the authorization level, this level is determined by the central module 26 on the basis of the data received from the positioning module 22, instead of from data read in the data-base 28.

This includes applications involving industrial flows of objects, while the access of goods to a specific area or to power a machine or production line can be conditioned by information stored for short periods in smart identification devices associated with the same subject, which may consist of information relating to environmental conditions to which a subject has been exposed, for example. This is the case for semi-finished products or active ingredients used by the pharmaceutical industry, for which it may be essential that the related substances have not been exposed to environmental conditions outside certain thresholds.

If the authorization level is stored in the identification device 14 instead of the data-base 28, the system 10 operates according to the logic represented in Figure 4B, whose flowchart is similar to that of Figure 4A, with the following differences:
- in step 42 the positioning module 22 also sends information to the central module 26 relating to the authorization level extracted from the identification device 14,
- step 40 performed by the central module 26 comprises both the step to verify the correspondence of the positions of the identification device 14 and the subject S and the step to verify the authorization level, without the need to access external systems.

The process carried out according to the flowchart shown in Figure 4B includes applications such as the organization of events, which usually have a limited time duration and for which it is often impossible to create a personal data-base or populate it with the necessary data. Therefore, in this type of applications, the information relating to the authorization level of the subjects S is normally stored in the same identification device 14, which can be delivered to the relevant subject S by the organizing body or transferred within a program downloadable by a subject onto their own mobile device.

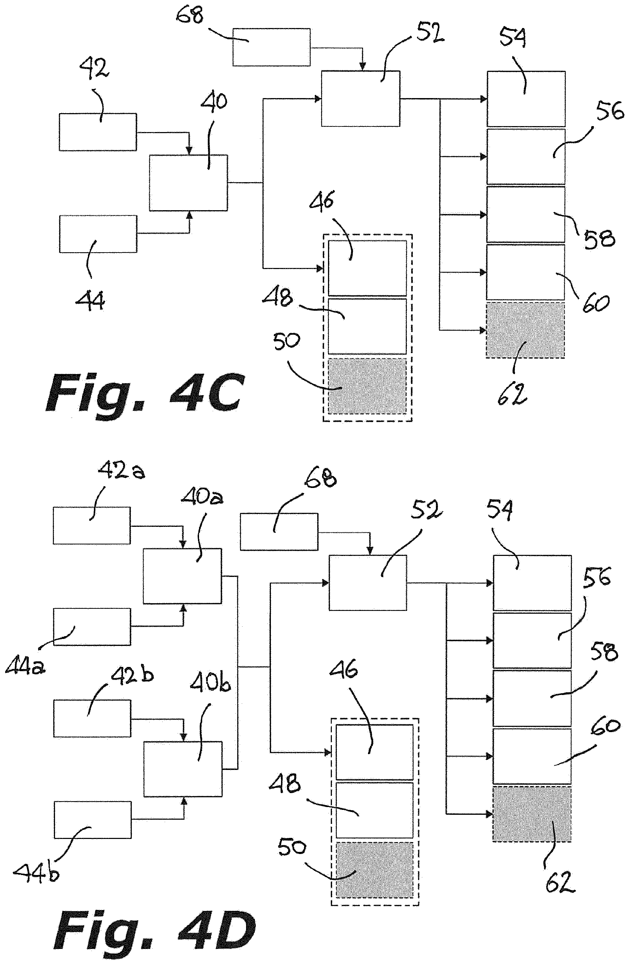

Figure 4C is also substantially similar to Figure 4A, the data transmitted by the positioning module 22 during step 42 being simple position data. The data necessary for the central module 26 to carry out the calculation of the authorization level during step 52 are supplied by the external control device 64 during step 68.

Practical cases of application of the process performed according to the flowchart shown in Figure 4C include those in which the access authorization level of an object or product in a specific area or for the power supply of a machine or a specific production line, is determined by the availability of the area (for example, if the area consists of a warehouse and the warehouse still has space available) or of the machine (for example, if the machine in question is ready to receive goods), or by environmental data (for example, the ambient temperature of the area is too high or the humidity level is too high, etc.). In these cases, the central module 26 establishes an algorithm capable of deciding the authorization level on the basis of data coming from external sensors or control devices 64, which are logically compared with parameters set or calculated by the same algorithm.

If the system 10 coexists with a traditional access control system 70 provided with physical barriers 66, it operates according to the logic represented by the flowchart in Figure 4D. In this particular case, there could be subjects S, who do not use the identification devices 14 considered above, but traditional systems, such as badges, very short range RFID tags, biometric readers or barcode readers, etc. In this case, verification of the correspondence between the position identified by the positioning module 22 and the subject S must follow two different methods:
- the method already described with reference to the flowchart of the basic logic in Figure 4A, performed in steps 40a, 42a and 44a, is applicable for the subjects S, who use the identification devices 14 for their recognition,
- in parallel, it must be verified whether a subject S can also be recognized through the pre-existing traditional control system 70, in which case the central module 26 verifies during step 40b that a subject S identified by the video analysis module 24 during step 44b and placed in proximity to a reader 72 associated with the traditional control system 70, is also capable of managing the recording of the relative transaction which takes place during step 42b. The subsequent steps performed by the system 10 substantially correspond to those already described with reference to Figure 4A, with the following differences:
- the verification calculation of the authorization level of step 52 is performed for the subjects S, who use the system 10 of the invention, according to any of the methods described with reference to the previous Figures 4A to 4C, while for the subjects S, who use the traditional system 70, the information relating to the authorization can be read by the traditional system 70 in which a data-base is often already integrated which can consist of the same data-base 28 of the system 10 of the invention, or be integrated in the external control device 64;
- in step 54 a transaction can also be recorded by the traditional control system 70;
- if the traditional control system 70 includes physical barriers 66, these can be opened or blocked directly by the traditional system 70 during the execution of step 58.

When a system 10 according to the invention is to be integrated with a traditional access control system 70 provided with physical barriers 66, these can be maintained to increase the security level of the integrated system. In this case, the central module 26 integrates in its operating logic the opening and closing steps of the physical barriers 66 and transmits the relative command directly to the barriers 66 or to a control unit of these barriers 66, and is able to provide information relating to the count of how many subjects S, authorized and unauthorized, have crossed the barriers 66. This functionality is not allowed by traditional access control systems, as their barriers are usually opened by an authorized subject, who can allow simultaneous access by other subjects of which neither an identification code nor any authorization level is known.

Again in the case of the integration of the system 10 of the invention with a traditional access control system 70, traditional readers 72 of cards or badges, RFID tags and biometric data etc. can coexist with the system 10. For this purpose, the integration of these traditional readers into the system 10 involves positioning the virtual entry line 12a in correspondence with the physical position of the traditional readers and implementing in the central module 26 an association function of the position of a subject S coming from the video analysis module 24, with the data of the relative unique identification code and with the authorization level of the subject S, coming from the data-base 28 of the system 10 to which the pre-existing traditional control system 70 is connected.

The system 10 of the invention can be used in various practical applications, some of which are mentioned below by way of example.

It can be used in buildings in which various restricted access areas are defined that require different progressive levels of authorization, for example, in the case where a building includes offices in which access is reserved only for certain subjects S. Whilst a control system without physical barriers can be considered sufficient for the purpose of security control of access to generic offices, physical barriers can be kept active for the purpose of accessing specific areas that require a higher level of security, physically preventing entry without a suitable authorization but making it possible to monitor that only the persons authorized for this area can access the higher security area, at the same time, effectively preventing a person S authorized to access the higher security area from allowing access to other subjects without specific authorization.

The system 10 can also be employed in a co-owned building, where an owner prefers to use a traditional access control system 70 instead of the control system of the invention. In this case, the traditional system 70 must be interfaced with the system 10 of the invention at least with reference to the common areas of the building. By interfacing the system 10 of the invention with the traditional control system 70, the advantage is obtained that all authorized or unauthorized accesses to a given area can be discriminated even for users of the traditional control system 70.

Furthermore, the system 10 of the invention makes it possible to provide an extremely precise count of the subjects S accessing an area with limited access, with an accuracy close to 100%, to allow the satisfaction of safety requirements imposed by regulations or authorities such as Firefighters, who often require a limit to be set on the maximum number of people present on the floors of a building to ensure a minimum evacuation speed in case of emergency, and to monitor the number of individuals passing through the gates of the escape routes to ensure the complete evacuation of a building. This function is guaranteed by the system 10 of the invention in view of the very high precision, close to 100%, that it can provide in the counting of individuals, thanks to the processing of data in real time through the use of a video analysis module 24 with very high precision based on neural network algorithms and the training steps to which these algorithms are subjected during the initialization phase of the system 10.

## Claims

1. Security system for controlling accesses and transits of subjects in a virtually delimited restricted access area (12), each subject (S) being provided with an identification device (14) to which a univocal identification code is associated which is correlated with information relating to an authorization level of the respective subject (S) for accessing said area (12), each identification device (14) being able to communicate outward said univocal code via a wireless communication protocol and to connect said information to the device itself, the control system (10) comprising:
- a location sub-system for locating the identification devices (14), which includes a receiving module (16) for receiving short or medium-range radio-frequency or ultrasound signals coming from the identification devices (14) in said area (12), which is adapted to process such signals to identify the identification devices (14) in real time,
- a spatial scanning sub-system including at least one optical device (18) whose field of view has a width such as to substantially cover the entire restricted access area (12), which is adapted to capture digital images of the restricted access area (12) in order to identify in these images the subjects (S) in said area (12),
- a processing sub-system (20) comprising:
- a positioning module (22) designed to determine the instantaneous position of each identification device (14) with respect to said area (12), by means of an algorithm for processing the signals coming from said location sub-system for locating the identification devices (14),
- a video analysis module (24) intended to interpret in real time the images captured by the spatial scanning sub-system to recognize in them the subjects (S) in said area (12), and to identify a position thereof with respect to the restricted area (12),
- a central module (26) adapted to receive the position data of the identification devices (14) which come from the positioning module (22), as well as the position data of the subjects (S) coming from the video analysis module (24), to verify, by a comparison algorithm, the existence of an authorization for each subject (S) which derives from a correspondence between them, and to determine an authorization level for each subject (S),
**characterized in that** the location sub-system is structured in such a manner as to identify the identification devices (14) in real time with a maximum uncertainty which is less than a minimum dimension of the relative subject referred to its projection in plan, and includes a transmission module (16) for transmitting signals towards the identification devices (14) in said area (12) to carry out bidirectional communications with each identification device (14), and **in that** the video analysis module (24) is responsible for assigning each subject (S) a predefined reference class by the use of a segmentation algorithm of the images coming from said at least one optical device (18), and for associating a simple reference figure to each subject (S) detected in said area (12) by means of a masking algorithm, said image segmentation and masking algorithms being neural network algorithms which are subjected to a prior training step to provide results with a predetermined accuracy in order that the system (10) is able to perform a reliable access control.

2. System according to claim 1, **characterized in that** the central module (26) is designed to send a signal related to the authorization level found for each subject (S) to the transmission module (16) of the location sub-system, to inform it of the own authorization level.

3. System according to claim 1 or 2, **characterized in that** the control system (10) includes a user interface module (30) that receives data from the central module (26) to manage communications addressed to supervisory personnel of the system (10) in the case of a violation performed by a person (S) lacking in an authorization to enter the restricted area (12).

4. System according to any one of claims 1 to 3, **characterized in that** the spatial scanning sub-system comprises a plurality of optical devices (18), and **in that** the video analysis module (24) is designed to correlate images of the same subject (S) captured by the plurality of optical devices (18) of the spatial scanning sub-system.

5. System according to any one of claims 1 to 4, **characterized in that** each identification device (14) includes at least one sensor adapted for measuring at least one physical quantity relating to a condition of the relevant subject (S), such as a temperature, a rate of humidity and/or an acceleration of the subject, and **in that** the presence of an authorization of the respective subject (S) is conditioned by the extent of said at least one physical quantity.

6. System according to any one of claims 1 to 5, **characterized in that** it comprises a data-base (28) connected to the central module (26) to allow to record in it information relating to each transit event of a subject (S) in said area (12), as well as data referring to any violation performed by a subject (S).

7. System according to any one of claims 1 to 6, **characterized in that** the receiving module (16) of radio-frequency signals of said location sub-system is able to discriminate in real time the different identification devices (14) with a maximum uncertainty equal to half of a minimum dimension of the respective subject (S) referred to its projection in plan.

8. System according to any one of claims 1 to 7, **characterized in that** the positioning module (22) and the video analysis module (24) of the processing sub-system (20) are integrated in one single processing calculation unit.

9. System according to any one of claims 1 to 7, **characterized in that** the positioning module (22) and the video analysis module (24) of the processing sub-system (20) are shared into a plurality of separate processing calculation units.

10. System according to any one of claims 1 to 9, **characterized in that** the video analysis module (24), as a result of the preliminary training of the image segmentation neural network algorithm and of the masking algorithm that associates a simple figure of reference to each subject (S) detected in said area (12), is able to discriminate the subjects (S) in each digital image and to identify the class of different subjects (S) with a precision close to 100%.

11. System according to any one of claims 1 to 10, **characterized in that** said video-analysis module (24) is interfaced with one or more auxiliary optical devices (19) whose field of view covers at least one area outside said restricted access area (12), to capture digital images of said outer area in order to display the position and/or a path (P1, P2) of a subject (S) who performed a violation and exit from said restricted access area (12).

12. System according to any one of claims 1 to 11, **characterized in that** said comparison algorithm performed by the central module (26) is structured to ascertain in real time a violation performed by a subject (S), using a processing time much shorter than 1 s.

13. System according to any one of claims 1 to 12, **characterized in that** the central module (26) is connected to an outer control device (64) and/or with a previously existing control system (70), in order to manage communications with said outer control device (64) and/or with said previously existing control system (70).

14. Method for controlling accesses and transits of subjects in a virtually delimited restricted access area, comprising the operations of:
- preparing a unique identification code for each subject (S) capable of accessing said restricted access area (12), as well as information relating to an authorization level of the respective subject (S) for the purposes of accessing said area (12),
- associating said unique code to an identification device (14) intended to be carried by a respective subject (S), each identification device being able to communicate said unique code outward via a wireless communication protocol,
- preparing a control system (10) for controlling accesses and transits of subjects (S) in said restricted access area (12), comprising a sub-system for locating the identification devices (14) which operates on the basis of short or medium range radio-frequency or ultrasounds signals coming from the identification devices (14) in said area (12) and received by a receiving module (16) associated with the control system (10),
- processing the signals received by the location sub-system to identify in real time the identification devices (14) in said area (12) and to determine an authorization level associated with them on the basis of information linked to the unique recognition code of each identification device (14),
- providing a spatial scanning sub-system including at least one optical device (18) whose field of view has an extension such as to substantially cover the entire restricted access area (12),
- capturing digital images of the restricted access area (12) by means of said spatial scanning sub-system to identify in these images the subjects (S) in said area (12),
- preparing a processing sub-system (20) that comprises a positioning module (22) operating according to a processing algorithm for processing the signals coming from said location sub-system of the identification devices (14), and determining through it the instantaneous position of each identification device (14) with respect to said area (12) as a result of the execution of said processing algorithm,
- preparing a video analysis module (24) adapted to recognize the subjects (S) in said area (12) in the images captured by the spatial scanning subsystem,
- interpreting the images captured by the spatial scanning sub-system to determine in real time a position of the subjects (S) in said area (12) by means of said video analysis module (24),
- preparing a central module (26) adapted to receive position data of the identification devices (14) from the positioning module (20), and to receive position data of the subjects (S) from the video analysis module (24),
- executing a comparison algorithm through the central module (26) to verify a correspondence between the position data of the identification devices (14) and the position data of the subjects (S) and to ascertain, as a result of this comparison, the presence of an authorization from the relevant subjects (S) for accessing said area (12) if a correspondence is found between the aforementioned data,
**characterized in that** it includes the operations of:
- preparing a signal transmission module (16) towards the identification devices (14) in said area (12) and associating it with the location sub-system of the identification device (14) to allow the control system (10) to carry out bidirectional communications of reception and transmission of data to and from each identification device (14),
- preparing the video analysis module (24) so as to attribute to each subject in said area (12) a respective reference class through the use of a neural network segmentation algorithm of the images coming from said at least one optical device (18), and to associate a simple reference figure to each subject (S) detected in the images captured in said area (12) by the spatial scanning sub-system, by means of a masking neural network algorithm,
- subjecting the video analysis module (24) to a preliminary training step of the image segmentation and masking algorithms, in order to obtain a desired precision of the data resulting from their execution,
in which the operations of identifying the identification devices (14) and determining their authorization level carried out by the localization sub-system involve the operation of imposing a maximum uncertainty less than a minimum dimension of the relative subject (S) referred to its projection in plan.

15. Method according to claim 14, **characterized in that** it comprises the operation of structuring the central module (26) in such a manner that it is able to send a signal related to the authorization level found for a relevant subject (S) to the transmission module (16) of the location sub-system, to inform the subject (S) of its own authorization level.

16. Method according to claim 14 or 15, **characterized in that** the operation of preparing the control system (10) includes the operation of associating to it a user interface module (30) configured to receive data from the central module (26) and to manage communications addressed to supervisory personnel of the control system (10), upon the occurrence of a violation of the access to the restricted area (12) performed by a person (S) lacking in an authorization.

17. Method according to any one of claims 14 to 16, **characterized in that** the spatial scanning subsystem comprises a plurality of optical devices (18), and **in that** the video analysis module (24) carries out an operation of correlating different images of the same subject (S) captured by the plurality of optical devices (18) of the spatial scanning sub-system.

18. Method according to any one of claims 14 to 17, **characterized in that** each identification device (14) includes at least one sensor capable of measuring at least one physical quantity relating to a condition of the relevant subject (S), such as a temperature, a rate of humidity and/or an acceleration of the subject (S), and **in that** it includes the operation of verifying the presence of an authorization of a subject (S) for accessing said area (12) as a function of the extent of said at least one physical quantity.

19. Method according to any one of claims 14 to 18, **characterized in that** it comprises the operations of preparing a data-base (28) for recording information relating to each transit event of a subject (S) in said area (12) and data referring to any violation performed by a subject (S), and the operation of connecting such data-base (28) with the central module (26) to allow the latter to record said information and said data.

20. Method according to any one of claims 14 to 19, **characterized in that** the operation of discriminating in real time the different identification devices (14) carried out by the radio-frequency signal receiving module (16), comprises the operation of imposing a maximum uncertainty of this discrimination equal to half of a minimum dimension of the relevant subject (S) referred to its projection in plan.

21. Method according to any one of claims 14 to 20, **characterized in that** it comprises the operation of integrating the positioning module (22) and the video analysis module (24) of the processing sub-system (20) in a single computer.

22. Method according to any one of claims 14 to 21, **characterized in that** it comprises the operation of sharing the positioning module (22) and the video analysis module (24) of the processing sub-system (20) into a plurality of separate computers.

23. Method according to any one of claims 14 to 22, **characterized in that** it comprises the operation of interfacing the video analysis module (24) with one or more auxiliary optical devices (19) whose field of view covers at least one outer area with respect to said restricted access area (12), as well as the operation of capturing digital images of said outer area in order to display the position and/or a path (P1, P2) of a subject (S) who performed a violation and who exit from the restricted access area (12).

24. Method according to any one of claims 14 to 23, **characterized in that** it comprises the operation of structuring said data comparison algorithm executed by the central module (26) to ascertain in real time a violation performed by a subject (S), so that it takes a processing time much shorter than 1 s.

25. Method according to any one of claims 14 to 24, **characterized in that** it comprises the operation of connecting said central module (26) with an outer control device (64) and/or with a previously existing control system (70), and the operation of managing communications between said central module (26) and said outer control device (64) and/or said previously existing control system (70).
